Europäisches Patentamt

European Patent Office

Office européen des brevets

(19)

(11) Veröffentlichungsnummer: **0 403 800**
**A1**

## (12) EUROPÄISCHE PATENTANMELDUNG

(21) Anmeldenummer: **90109360.9**

(22) Anmeldetag: **17.05.90**

(51) Int. Cl.5: **F16M 13/00**

(30) Priorität: **24.05.89 DE 3916976**

(43) Veröffentlichungstag der Anmeldung:
**27.12.90 Patentblatt 90/52**

(84) Benannte Vertragsstaaten:
**BE CH DE FR GB IT LI NL SE**

(71) Anmelder: **F.M.K. Kreuzer GmbH & Co. KG**
**Benzstrasse 26**
**D-8039 Puchheim(DE)**

(72) Erfinder: **Schönfelder, Jürgen**
**Eschenstrasse 48**
**D-8044 Unterschleissheim(DE)**

(74) Vertreter: **Prüfer, Lutz H., Dipl.-Phys.**
**Harthauser Strasse 25d**
**D-8000 München 90(DE)**

(54) **System mit einem ausleger zum aufnehmen von auf laufrollen gelagerten gegenständen.**

(57) Es wird ein System mit einem Ausleger (7) zum
Aufnehmen von auf Rollen gelagerten Gegenständen, die in einer ersten Richtung auf den Ausleger
bis in eine Arretierposition auffahrbar und durch Bewegen in im wesentlichen entgegengesetzte Richtung wieder abfahrbar sind, geschaffen. Damit die
Rollen (25, 26) in einer Parkposition arretiert sind
und sich beim Abziehen besonders gut wieder abfahren lassen, weist der Ausleger (7) an der Stelle
der Arretierposition für die Rollen eine sich quer zur
Auffahrrichtung erstreckende Vertiefung (27) auf. Am
auffahrseitigen Rand der Vertiefung ist ein im wesentlichen ebener Abschnitt (31) vorgesehen, an
dem die in die Vertiefung (27) eingefahrene Rolle
(25, 26) anliegt.

FIG. 4

FIG. 5

EP 0 403 800 A1

## System mit einem Ausleger zum Aufnehmen von auf Laufrollen gelagerten Gegenständen

Die Erfindung betrifft ein System mit einem Ausleger zum Aufnehmen von auf Laufrollen gelagerten Gegenständen nach dem Oberbegriff des Patentanspruches 1. Ein derartiges System wird insbesondere an Stativen zur Aufnahme von medizinischen Geräten angewendet.

In der nicht vorveröffentlichten europäischen Patentanmeldung 88 120 738.5 ist ein derartiges System als Teil eines Deckenstatives zur Aufnahme von medizinischen Geräten beschrieben. Am Fuß des Statives sind zwei Schienen vorgesehen, auf die ein Gerät mit seinen Laufrollen aufgeschoben wird. Damit das aufzuschiebende Gerät mit seinen Laufrollen in einer vorgegebenen Stellung gehalten werden kann, ist eine mechanische Verriegelung mit Stiften vorgesehen. Die Schienen haben eine seitliche Begrenzung, deren Abstand im wesentlichen gleich der Breite der Laufrollen ist, damit diese geführt werden. Beim Zurückziehen des Wagens werden die Laufrollen nach dem Lösen der Verriegelung in der gleichen Richtung durch das Anschlagen an den seitlichen Schienen geführt.

Aufgabe der Erfindung ist es, ein System der eingangs beschriebenen Art zu schaffen, welches die Arretierung eines aufgefahrenen Gerätes in einer bestimmten Position vereinfacht und welches so ausgebildet ist, daß das Zurückführen des Wagens für die Fälle vereinfacht wird, in denen die Laufrollen so gelagert sind, daß ihre Achse in vertikaler Projektion nicht mit der dazu senkrecht erstreckenden Drehachse für die Laufrollenhalterung im Gerät zusammenfällt.

Diese Aufgabe wird durch das in Patentanspruch 1 gekennzeichnete System gelöst.

Weiterbildungen der Erfindung sind in den Unteransprüchen gekennzeichnet.

Weitere Merkmale und Zweckmäßigkeiten der Erfindung ergeben sich aus der Beschreibung eines Ausführungsbeispieles anhand der Figuren. Von den Figuren zeigen:

Fig. 1 Eine Vorderansicht eines Deckenstatives mit einem auf dem System aufgenommenen Wagen;

Fig. 2 eine Seitenansicht des Deckenstatives mit dem System, teilweise in weggebrochener Darstellung, wobei die abgesenkte Stellung von Stativ und System gestrichelt und die angehobene Stellung in durchgezogenen Linien gezeigt ist;

Fig. 3 ein Teil des in Fig. 2 in Seitenansicht gezeigten Systems mit hochgeklappten Schienen;

Fig. 4 das System mit einem daraufgefahrenen Wagenunterteil in perspektivischer Ansicht;

Fig. 5 eine Seitenansicht der in Fig. 4 gezeigten Darstellung, wobei die vordere seitliche Begrenzung der Schiene weggelassen ist.

Fig. 6 eine weitere Verbesserung an den Schienen eines erfindungsgemäßen Systems;

Fig. 7 eine Seitenansicht der in Fig. 6 gezeigten Darstellung, ohne seitliche Begrenzung der Schiene.

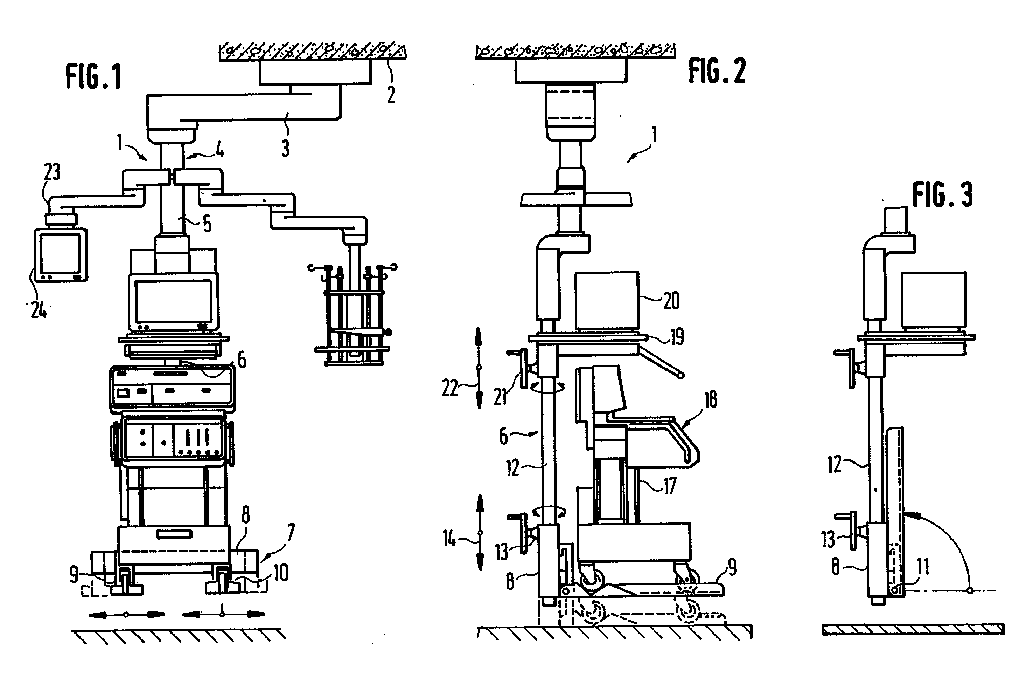

Das Deckenstativ 1 weist einen an einer Decke 2 über ein Gelenk zu befestigenden Auslegerarm 3 und eine mit diesem gelenkig verbundene Säule 4 auf. Die Säule 4 weist einen mit dem Auslegerarm 3 verbundenen ersten Abschnitt 5 und einen zweiten Abschnitt 6 auf. Am bodenseitigen Ende des zweiten Abschnittes 6 ist ein Ausleger als Geräteaufnahmeeinrichtung 7 vorgesehen. Diese weist am bodenseitigen Ende der Säule ein sich quer zu dieser erstreckendes Joch 8 auf. Wie insbesondere aus den Figuren 2 und 3 ersichtlich ist, ist an dem Joch ein sich in Arbeitsstellung in horizontaler Richtung erstreckendes Schienenpaar 9, 10 angeordnet. Die Verbindung zwischen Joch und den Schienen erfolgt über ein jeweiliges Drehgelenk 11 derart, daß die Schienen in Ruhestellung in der in Fig. 3 ersichtlichen Weise nach oben einklappbar sind.

In dem gezeigten Ausführungsbeispiel weist der zweite Abschnitt 6 eine Zahnstange 12 und eine das Joch tragende Spindel 13 auf. Dadurch ist die Geräteaufnahmeeinrichtung durch Betätigen der Spindel in Richtung des Pfeiles 14 zwischen der in Fig. 2 in durchgezogenen Linien gezeigten Arbeitsstellung und der in gestrichelten Linien gezeigten abgesenkten Stellung auf- und abbewegbar. Dabei erfolgt die Höhenverstellung bevorzugt über eine Handkurbel, was den Vorteil hat, daß keine Kontaktleisten oder ähnliche Sicherheitseinrichtungen erforderlich sind. Anstelle des handbetätigten Höhenverstellmechanismus kann die Höhenverstellung alternativ auch über einen motorischen Antrieb erfolgen.

Die Schienen 9, 10 sind über eine in Fig. 1 nur schematisch dargestellte Führung an dem Joch 8 in horizontaler Richtung entgegengesetzt zueinander ausfahrbar bzw. zueinander einfahrbar derart, daß die beiden Schienen von einer in Fig. 1 in durchgezogenen Linien gezeigten engeren Stellung bis zu einer gestrichelt angedeuteten weiter auseinanderliegenden Stellung hin- und herfahrbar sind, wie dies durch die Pfeile in Fig. 1 angedeutet ist. Dadurch wird erreicht, daß eine breitenmäßige Anpassung der Schiene an verschiedenste Radabstände von Transportwagen möglich ist.

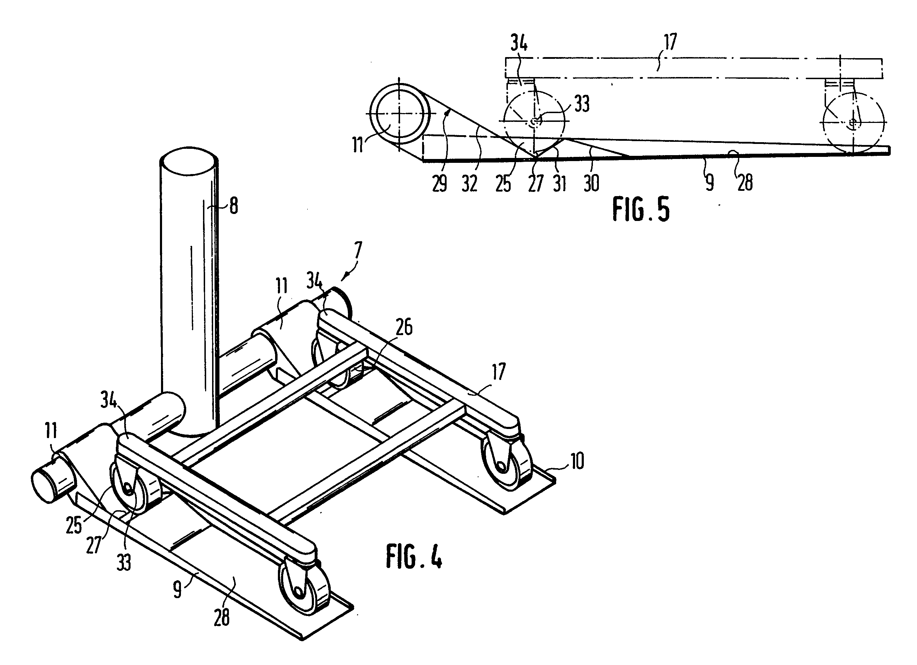

Wie am besten aus den Figuren 4 und 5 ersichtlich ist, weisen die Schienen an ihrem Ende an der Stelle, an der die zuerst auf die Schiene gefahrenen Laufrollen 25, 26 während der Parkposition des aufzunehmenden Gerätes arretiert sein sollen, eine sich quer zur Schienenrichtung und damit quer zur Auffahrrichtung erstreckende Vertiefung 27 auf. In dem gezeigten Ausführungsbeispiel ist die Vertiefung dadurch gebildet, daß auf dem Schienenboden 28 ein Blech 29 aufgelegt ist, welches in Auffahrrichtung gesehen einen als Auffahrrampe gebildeten ansteigenden ersten Abschnitt 30, einen daran anschließenden zum Grund der Vertiefung abfallenden zweiten Abschnitt 31 und einen daran anschließenden vom Grund der Vertiefung ansteigenden dritten Abschnitt 32 aufweist. Der zweite und dritte Abschnitt 31, 32 sind vorzugsweise unter einem Winkel von 20° bis 40° und vorzugsweise im Bereich von 30° gegen die Horizontale geneigt. Die Länge der beiden Abschnitte zwei und drei ist für die in Anwendung kommenden Laufrollen so gewählt, daß sie jeweils größer ist als der Abstand vom Grund der Vertiefung bis zur Berührungsstelle zwischen Laufrolle und Abschnitt. Es soll also jeweils ein im wesentlichen ebener Abschnitt zwischen der Berührungsstelle und dem Rand zum ersten Abschnitt 30 hin verbleiben. Wie insbesondere aus Fig. 4 ersichtlich ist, weisen die Schienen 9, 10 eine Breite auf, die erheblich größer ist als die Breite der Laufrollen 25, 26.

In dem beschriebenen Ausführungsbeispiel ist die Vertiefung dadurch gebildet, daß auf den Boden einfach das oben beschriebene und in Figuren 4 und 5 im Schnitt seine Biegung zeigende Blech aufgelegt ist. Die Vertiefung kann aber auch dadurch gebildet werden, daß im Schienenboden 28 selbst eine entsprechende Quervertiefung eingestanzt oder sonstwie angebracht ist. Die oben beschriebene Ausführungsform ist jedoch leicht herstellbar.

Im Betrieb wird der Wagen 17 einfach in die in den Figuren 4 und 5 gezeigte Parkposition aufgeschoben. Dabei stellen sich die Laufrollen 25, 26 von selbst in die gezeigte Stellung derart ein, daß die Radachsen 33 in Vertikalprojektion und in Laufrichtung des Wagens gesehen hinter der jeweiligen vertikalen Drehachse 34, mit der die Halterung für die Laufrollen am Wagen befestigt ist, liegen. Sobald die Laufrollen in die Vertiefung eingelaufen sind, ist der Wagen gegen Verschiebung arretiert. Soll der Wagen von den Schienen wieder abgezogen werden, so bewirkt die Ausbildung der Vertiefung und die Breite der Schienen, daß sich die in der Vertiefung liegenden Laufrollen zunächst um die Drehachse 34 so schwenken, daß die Radachse 33 im wesentlichen um 180° um die Drehachse 34 geschwenkt wird und erst dann die Laufrollen in nun entgegengesetzter Richtung über den zweiten Abschnitt hinweg über den rampenförmigen ersten Abschnitt und den Schienenboden abgezogen werden. Die angegebene Neigung vom zweiten und dritten Abschnitt hat zur Folge, daß einerseits eine ausreichende Arretierung der Laufrollen in der gewünschten Position erreicht wird, daß aber gleichzeitig sich die Räder beim Zurückziehen in der oben beschriebenen Weise um die Drehachsen 34 schwenken und somit ein besonders gutes Wiederabfahren von den Schienen möglich ist.

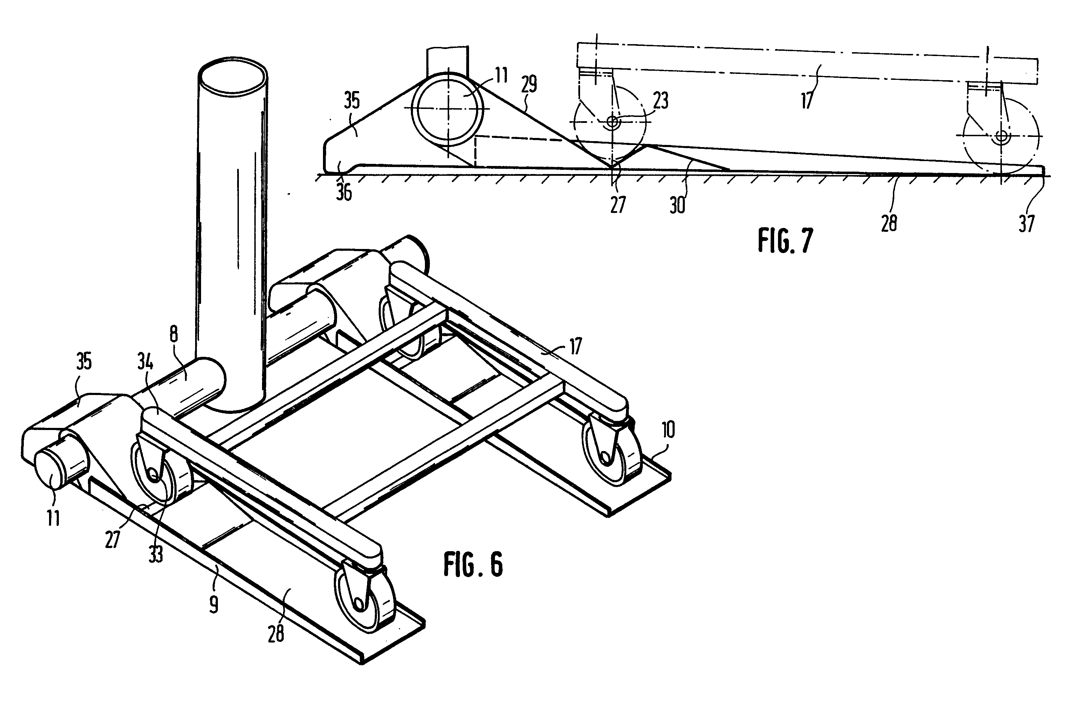

Bei dem in den Fig. 6 und 7 gezeigten Ausführungsbeispiel ist an der den Schienen 9, 10 gegenüberliegenden Seite des Drehgelenkes 11 je ein Sporn 35 vorgesehen, der einstückig mit den Schienen ausgebildet ist und sich somit ebenfalls um das Drehgelenk 11 dreht. Der Sporn 35 ist so geformt, daß das bodenseitige freie Ende 37 der Schienen und das bodenseitige freie Ende 36 des Spornes 35 im wesentlichen in einer Ebene liegen, die sich um 90° gegen die vertikale Säule 4 erstreckt, wenn die Schienen in der in Fig. 7 gezeigten abgeklappten Arbeitsstellung liegen. Das hat den Vorteil, daß die freien Auffahrenden 37 der Schienen 9, 10 beim Herabfahren der Geräteaufnahmeeinrichtung 10 sicher am Boden aufliegen und auch nicht nach oben hervorstehen, wenn kleine Unebenheiten am Boden liegen. Vorzugsweise ist das freie Ende des Spornes 35 als eine nach unten hervorstehende Nase 36 ausgebildet, so daß zwischen der Nase 36 und dem freien Ende 37 der Schiene ein Freiraum zwischen Schiene und Boden verbleibt.

An dem Stativ ist in einer Höhe oberhalb eines sich in Arbeitsstellung befindenden Narkosegerätes 18 ein erster Monitorträger 19 vorgesehen, der zur Aufnahme eines ersten Monitors 20 dient. Der Monitorträger ist über eine entsprechende Spindel 21 auf der Zahnstange 12 in Richtung des Pfeiles 22 unabhängig von der Höhe der Geräteaufnahmeeinrichtung 7 höhenverstellbar. Sowohl die Geräteaufnahmeeinrichtung 7 als auch der erste Monitorträger sind ferner in der durch die in Fig. 2 gezeigten Pfeile angedeuteten Weise um die Säulenachse schwenkbar. Das Stativ trägt einen zweiten Monitorträger 23, der mit dem ersten Abschnitt 5 der Säule bezüglich der axialen Richtung der Säule fest verbunden ist. Der erste Monitorträger 19 kann alternativ auch mit dem ersten Abschnitt 5 der Säule verbunden sein.

Im Betrieb sind die beiden Monitore 20 und 24 bezüglich ihrer Neigung des Bildschirmes zu dem Arbeitsplatz passend in ihrer Neigung eingestellt. Das Narkosegerät 18 mit seinem Wagen 17 ist auf den Schienen 9, 10 durch Einfahren in die Vertiefung ortsfest gehalten und über die Spindel 13 soweit nach oben gefahren, bis Bodenfreiheit besteht, so daß auch das Narkosegerät um die Achse des zweiten Abschnittes schwenkbar ist. Das Narkosegerät wird mit den durch den ortsfesten ersten Abschnitt der Säule geführten und hier nicht gezeigten Versorgungsleitungen verbunden.

Soll das Narkosegerät zu einem anderen Einsatzort bewegt werden, wird die Geräteaufnahmeeinrichtung in die in Fig. 2 gestrichelt dargestellte Stellung zum Boden abgesenkt. Dann wird das Gerät mit dem Wagen weggefahren. Gewünschtenfalls kann dasselbe oder ein anderes Gerät jederzeit wieder auf die Schienen gefahren werden. Hat der Wagen eines anderen Gerätes einen anderen Radabstand, werden die Schienen zur Anpassung an denselben seitlich verschoben. Nach der Aufnahme des Wagens wird dieser wiederum in die durchgezogen gezeigte Stellung angehoben. Wird kein Wagen aufgenommen, werden die Schienen in die in Fig. 3 gezeigte Stellung nach oben geklappt. Weder zur Abgabe eines Gerätes noch zur Aufnahme eines neuen Gerätes ist es erforderlich, die übrigen Geräte in ihrer Höhenstellung zu verändern. Das ist wesentlich, weil es dadurch vermieden wird, daß die einmal für den Arbeitsplatz günstig eingestellten Monitore jeweils wieder neu in ihrer Neigung einzujustieren sind.

**Ansprüche**

1. System mit einem Ausleger (7) zum Aufnehmen von auf Laufrollen (25, 26) gelagerten Gegenständen, die in einer ersten Richtung auf den Ausleger (7) bis in eine Arretierposition auffahrbar und durch Bewegen in im wesentlichen entgegengesetzter zweiter Richtung wieder abfahrbar sind, dadurch gekennzeichnet, daß der Ausleger (7) an der Stelle wenigstens einer Rolle (25, 26) in der Arretierposition eine sich quer zur ersten Richtung erstreckende Vertiefung (27) aufweist, die aus zwei zueinander geneigten Ebenen gebildet ist, die gegen die Horizontale geneigt sind.

2. System mit einem Ausleger (7) zum Aufnehmen von auf Laufrollen (25, 26) gelagerten Gegenständen nach Anspruch 1, dadurch gekennzeichnet, daß die beiden Ebenen um eta 20° bis 40° gegen die Horizontale geneigt sind.

3. System mit einem Ausleger (7) zum Aufnehmen von auf Laufrollen (25, 26) gelagerten Gegenständen nach einem der Ansprüche 1 bis 2, dadurch gekennzeichnet, daß die auffahrseitige Ebene (31) unter einem Winkel von etwa 30° gegen die Horizontale geneigt ist.

4. System mit einem Ausleger (7) zum Aufnehmen von auf Laufrollen (25, 26) gelagerten Gegenständen nach einem der Ansprüche 1 bis 3, dadurch gekennzeichnet, daß die Vertiefung (27) aus einem Blech (29) gebildet ist, welches auffahrseitig vor der Vertiefung (27) eine Auffahrrampe (30) bildet.

5. System mit einem Ausleger (7) zum Aufnehmen von auf Laufrollen (25, 26) gelagerten Gegenständen nach einem der Ansprüche 1 bis 4,

dadurch gekennzeichnet, daß ein Paar von derartigen Vertiefungen in einem dem Querabstand eines Rollenpaares entsprechenden Querabstand vorgesehen ist.

6. System nach einem Ausleger (7) zum Aufnehmen von auf Laufrollen (25, 26) gelagerten Gegenständen nach einem der Ansprüche 1 bis 5, dadurch gekennzeichnet, daß die Vertiefungen auf Schienen (9, 10) angeordnet sind, deren seitliche Ausdehnung größer ist als die Rollenbreite.

7. System mit einem Ausleger (7) zum Aufnehmen von auf Laufrollen (25, 26) gelagerten Gegenständen nach einem der Ansprüche 1 bis 6, dadurch gekennzeichnet, daß der Ausleger (7) an dem bodenseitigen Ende einer Säule (12) eines Statives angebracht ist.

8. System mit einem Ausleger (7) zum Aufnehmen von auf Laufrollen (25, 26) gelagerten Gegenständen nach einem der Ansprüche 5 bis 7, dadurch gekennzeichnet, daß die zwei Schienen (9, 10) in ihrem Abstand zueinander einstellbar sind.

9. System mit einem Ausleger (7) zum Aufnehmen von auf Laufrollen (25, 26) gelagerten Gegenständen nach einem der Ansprüche 5 bis 8, dadurch gekennzeichnet, daß die Schienen (9, 10) um einen am säulenseitigen Ende liegenden Drehpunkt (11) hochklappbar sind.

10. System mit einem Ausleger (7) zum Aufnehmen von auf Laufrollen (25, 26) gelagerten Gegenständen nach einem der Ansprüche 5 bis 9, dadurch gekennzeichnet, daß die Schienen (9, 10) an einem sich quer zu dem zweiten Abschnitt aufweisenden Joch (8) befestigt sind.

11. System mit einem Ausleger (7) zum Aufnehmen von auf Laufrollen (25, 26) gelagerten Gegenständen nach einem der Ansprüche 1 bis 10, dadurch gekennzeichnet, daß an der den Schienen (9, 10) gegenüberliegenden Seite des Drehgelenkes (11) je ein mit einer Schiene fest verbundener Sporn (35) vorgesehen ist.

12. System mit einem Ausleger (7) zum Aufnehmen von auf Laufrollen (25, 26) gelagerten Gegenständen nach Anspruch 11, dadurch gekennzeichnet, daß der Sporn (35) an seiner Bodenseite mit einer Nase (36) versehen ist.

FIG. 3

FIG. 2

FIG. 1

FIG. 5

FIG. 4

FIG.7

FIG. 6

**Europäisches Patentamt**

# EUROPÄISCHER RECHERCHENBERICHT

Nummer der Anmeldung

EP 90 10 9360

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-1 534 099 (GUERIN)<br>--- | | F 16 M 13/00 |
| A | FR-A-2 453 066 (COAT)<br>--- | | |
| A | FR-A-2 456 011 (COAT)<br>--- | | |
| P,A<br>D | EP-A-0 321 822 (KREUZER)<br><br>----- | | |

**RECHERCHIERTE SACHGEBIETE (Int. Cl.5)**

F 16 M
B 62 B
A 61 G

Der vorliegende Recherchenbericht wurde für alle Patentansprüche erstellt

| Recherchenort | Abschlußdatum der Recherche | Prüfer |
|---|---|---|
| DEN HAAG | 28-09-1990 | BARON C. |